# EUROPÄISCHE PATENTSCHRIFT

(11) **EP 2 605 937 B1**
(45) Veröffentlichungstag und Bekanntmachung des Hinweises auf die Patenterteilung: **02.09.2015**
(21) Anmeldenummer: 11732438.4
(22) Anmeldetag: 12.07.2011
(51) Int. Cl.: B60R 21/213, B60R 21/215, B60R 13/02, F16B 21/08

(54) **VORRICHTUNG ZUM HALTEN EINES ANBAUTEILES AN EINEM TRÄGERTEIL SOWIE ANORDNUNG MIT EINER DERARTIGEN VORRICHTUNG UND MIT EINEM ANBAUTEIL**
DEVICE FOR RETAINING AN ATTACHED PART ON A CARRIER PART AND ARRANGEMENT HAVING SUCH A DEVICE AND HAVING AN ATTACHED PART
DISPOSITIF POUR MAINTENIR UNE PIÈCE RAPPORTÉE SUR UNE PIÈCE PORTEUSE ET ENSEMBLE COMPRENANT UN TEL DISPOSITIF ET UNE PIÈCE RAPPORTÉE

(30) Priorität: 20.08.2010 DE 102010035011
(43) Veröffentlichungstag der Anmeldung: 26.06.2013
(73) Patentinhaber: A. RAYMOND et Cie, 38000 Grenoble (FR)
(72) Erfinder: DE JONG, Michael, 79589 Binzen (DE); BREITENFELD, Jens, 79539 Lörrach (DE)
(74) Vertreter: RACKETTE Patentanwälte PartG mbB
(86) Internationale Anmeldenummer: PCT/EP2011/061876
(87) Internationale Veröffentlichungsnummer: WO 2012/022545

(56) Entgegenhaltungen:
- EP-A1- 2 090 475
- WO-A1-2009/063715
- DE-B3-102007 042 873
- GB-A- 2 364 973

## Beschreibung

Die Erfindung betrifft eine Vorrichtung zum Halten eines Anbauteiles an einem Trägerteil gemäß dem Oberbegriff des Patentanspruches 1.

Die Erfindung betrifft weiterhin eine Anordnung mit einer derartigen Vorrichtung und mit einem Anbauteil.

Eine derartige Vorrichtung ist aus EP 2 090 475 A1 bekannt. Die vorbekannte Vorrichtung zum Halten eines Anbauteiles an einem Trägerteil in einer Montagestellung und in einer Auszugsstellung verfügt über ein Klammerteil, das in einem Fußende ausgebildete Rastschenkel zum Eingriff mit einem Trägerteil aufweist. Das Klammerteil ist weiterhin mit einer in einem Abstand von dem Fußende ausgebildeten Fixieranordnung zum Eingriff mit einem Anbauteil ausgestattet und verfügt über eine Anschlageinrichtung, die das Anbauteil in der gegenüber der Montagestellung weiter von dem Trägerteil beabstandeten Auszugsstellung hält.

Aus DE 10 2007 042 873 B3 ist eine Vorrichtung zum Befestigen eines Anbauteiles an einem Trägerteil bekannt, die über ein Klammerteil mit an einem Fußende ausgebildeten Rastschenkeln und über ein Entriegelungsteil verfügt. Das Klammerteil weist zwei Seitenwände sowie wenigstens eine Querwand auf, die die Seitenwände verbindet und zwischen denen das Entriegelungsteil verschiebbar gelagert ist. Das Entriegelungsteil ist mit einer Demontageeinrichtung ausgestattet, mit der in einer Demontageposition des Entriegelungsteiles ein Eingriff der Rastschenkel mit einem Trägerteil lösbar ist. Zum zuverlässigen Sicherstellen eines dauerhaften Lösen des Eingriffs der Rastschenkel mit dem Trägerteil ist das Entriegelungsteil in dauerhaftem Andruck gegen die Rastschenkel zu halten, um ein Verschieben des Entriegelungsteiles von den Rastschenkeln weg zu verhindern.

Der Erfindung liegt die Aufgabe zugrunde, eine Vorrichtung sowie eine Anordnung der eingangs genannten Arten anzugeben, die mittels eines Anbauteiles ein verhältnismäßig einfaches Entfernen des Klammerteiles von dem Trägerteil gestatten, falls sich das Anbauteil in einer gegenüber einer Montagestellung weiter von dem Trägerteil beabstandeten Auszugsstellung befindet.

Diese Aufgabe wird bei einer Vorrichtung der eingangs genannten Art erfindungsgemäß mit den kennzeichnenden Merkmalen des Patentanspruches 1 gelöst.

Diese Aufgabe wird erfindungsgemäß mit einer Anordnung gemäß Patentanspruch 14 gelöst.

Dadurch, dass ein Entriegelungsteil vorhanden ist, das verschiebbar in dem Klammerteil gelagert ist und das eine Demontageeinrichtung aufweist, mit der in einer Demontageposition des Entriegelungsteiles ein Eingriff der Rastschenkel des Klammerteiles mit dem Trägerteil durch Einwirken auf die Einschubwiderlagernase lösbar und durch die Auszugwiderlagernase während eines Demontagevorganges dauerhaft fixierbar ist, lässt sich bei Überführen des Entriegelungsteiles von einer Freigabeposition in eine Demontageposition das Klammerteil nach Lösen des Eingriffs der Rastschenkeln mit dem Trägerteil sehr einfach von dem Trägerteil entfernen.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung.

Es zeigen:
- Fig. 1: in einer perspektivischen Explosionsansicht ein Ausführungsbeispiel einer erfindungsgemäßen Vorrichtung mit einem Klammerteil und mit einem Entriegelungsteil,
- Fig. 2: in einer perspektivischen Ansicht das Ausführungsbeispiel gemäß Fig. 1 mit dem Entriegelungsteil in einer in das Klammerteil eingeschobenen Freigabeposition,
- Fig. 3: in einer Schnittansicht das Ausführungsbeispiel gemäß Fig. 1 mit dem Entriegelungsteil in der Freigabeposition gemäß Fig. 2 beim Halten eines sich in einer Montagestellung befindlichen Anbauteiles an einem Trägerteil,
- Fig. 4: in einer Schnittansicht die Anordnung gemäß Fig. 3 mit dem Anbauteil in einer Auszugsstellung, in der das Anbauteil gegenüber der Montagestellung gemäß Fig. 3 weiter von dem Trägerteil beabstandet ist,
- Fig. 5: in einer Schnittansicht die Anordnung gemäß Fig. 4 mit dem Entriegelungsteil in einer Demontageposition und
- Fig. 6: in einer Schnittansicht die Anordnung gemäß Fig. 5 mit einem aus dem Trägerteil herausgezogenen Klammerteil.

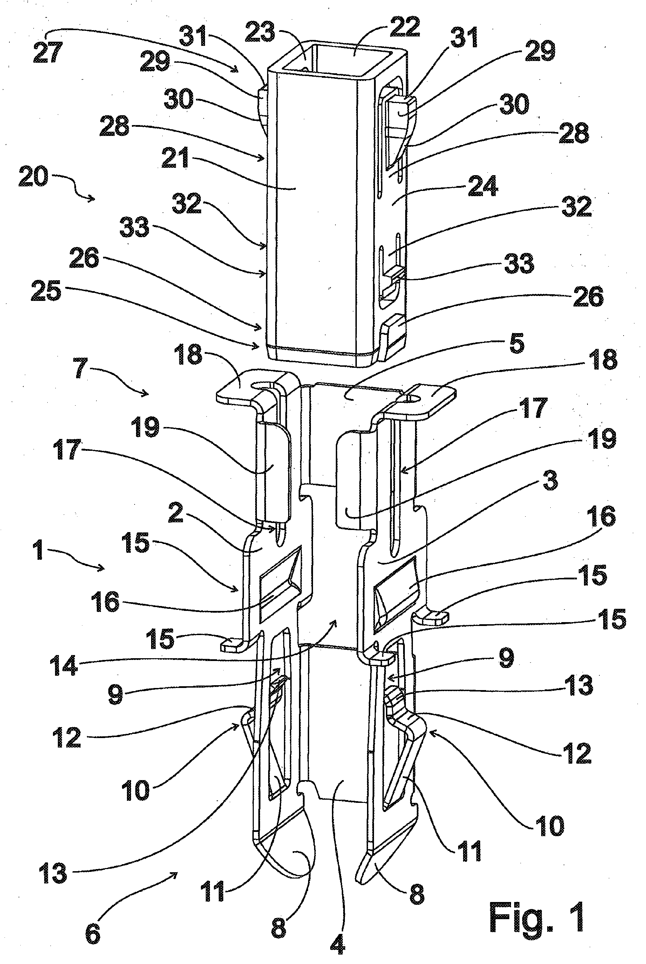

Fig. 1 zeigt in einer perspektivischen Ansicht ein Ausführungsbeispiel einer erfindungsgemäßen Vorrichtung, die vorzugsweise mit einem als Stanz-Biege-Teil aus einem Blechstreifen hergestellten länglichen Klammerteil 1 ausgestattet ist. Das Klammerteil 1 ist im Wesentlichen U-artig ausgebildet und verfügt über eine erste Seitenwand 2, über eine zweite Seitenwand 3, wobei die Seitenwände 2, 3 parallel zueinander ausgerichtet sind, und über eine fußseitige Querwand 4 sowie über eine kopfseitige Querwand 5, die die Seitenwände 2, 3 im Bereich eines Fußendes 6 beziehungsweise im Bereich eines Kopfendes 7 miteinander verbinden.

An jeder Seitenwand 2, 3 ist im Bereich des Fußendes 6 eine Fußzunge 8 ausgebildet, die sich von dem Kopfende 7 weg erstrecken und winklig aufeinander zu weisend ausgerichtet sind. Weiterhin weist jede Seitenwand 2, 3 im Bereich des Fußendes 6 eine in etwa rechteckförmige, sich mit ihrer Langseite in Längsrichtung des Klammerteiles 1 erstreckende Freimachung 9 auf, in die jeweils ein Rastschenkel 10 eingreift. Jeder Rastschenkel 10 ist mit einem Anbindungsabschnitt 11 auf der der betreffenden Fußzunge 8 zugewandten Seite der Freimachung 9 mit der betreffenden Seitenwand 2, 3 verbunden und erstreckt sich von jeder Seitenwand 2, 3 schräg von der betreffenden Seitenwand 2, 3 weg weisend nach außen. Jeder Rastschenkel 10 ist weiterhin mit einem Anlageabschnitt 12 ausgebildet, der sich von dem dem Kopfende 7 zugewandten Ende des Anbindungsabschnittes 11 in Richtung der betreffenden Seitenwand 2, 3 erstreckt und in etwa rechtwinklig zu dem jeweiligen Anbindungsabschnitt 11 ausgerichtet ist. An dem dem Anbindungsabschnitt 11 abgewandten Ende des Anlageabschnittes 12 weist jeder Rastschenkel 10 einen Entriegelungsabschnitt 13 auf, der sich in einer relaxierten Stellung der Rastschenkel 10 gemäß Fig. 1 mit einer Krümmung durch die jeweilige Freimachung hindurch in einen Innenraum 14 des Klammerteiles 1 erstreckt, so dass ein Endabschnitt jedes Entriegelungsabschnittes 13 auf der dem jeweiligen Anbindungsabschnitt 11 eines Rastschenkels 10 gegenüber liegenden Seite der betreffenden Seitenwand 2, 3 angeordnet ist.

Zwischen den Rastschenkeln 10 und dem Kopfende 7 sind 1 an den Seitenwänden 2, 3 angeformte und rechtwinklig zu den Seitenwänden 2, 3 ausgerichtete Gegenzungen 15 vorhanden, die sich von den Seitenwänden 2, 3 weg weisend nach außen erstrecken. Weiterhin ist in jeder Seitenwand 2, 3 auf der den Rastschenkeln 10 gegenüber liegenden Seite der Gegenzungen 15 jeweils ein Ausbuchtabschnitt 16 ausgebildet, die bei jeder Seitenwand 2, 3 nach außen überstehen und eine den Gegenzungen 15 zugewandte steilere Flanke und eine dem Kopfende 7 zugewandte flachere Flanke aufweisen.

Auf der dem Kopfende 7 zugewandten Seite der Ausbuchtabschnitte 16 weist jede Seitenwand 2, 3 eine Führungsnut 17 auf, die sich mit einem gewissen Abstand von den Ausbuchtabschnitten 16 in Richtung des Kopfendes 7 erstrecken. Die Führungsnuten 17 laufen in Kopfplatten 18 aus, die am Kopfende 7 angeordnet und rechtwinklig nach außen abgestellt sind. Schließlich ist das Klammerteil 1 am Kopfende 7 mit Versteifungslaschen 19 ausgebildet, die an den der kopfseitigen Querwand 5 gegenüber liegenden Randseiten der Seitenwände 2, 3 angeordnet sind und sich nach innen weisend aufeinander zu erstrecken, um das Klammerteil 1 im Bereich der Führungsnuten 17 zu versteifen.

Weiterhin verfügt das Ausführungsbeispiel einer erfindungsgemäßen Vorrichtung gemäß Fig. 1 über ein Entriegelungsteil 20, das vorzugsweise aus einem hartelastischen Kunststoffmaterial hergestellt ist und bei diesem Ausführungsbeispiel im Wesentlichen die Gestalt einer mechanisch sehr stabilen quaderförmigen, innenseitig hohlen Hülse aufweist. Das Entriegelungsteil 20 weist zwei parallel zueinander ausgerichtete glattwandige Querwände 21, 22 auf, an deren Randseiten zwei Randwände 23, 24 angeordnet sind. An einem in der Darstellung gemäß Fig. 1 dem Kopfende 7 des Klammerteiles 1 zugewandten Fußende 25 des Entriegelungsteiles 20 sind an den Randwänden 23, 24 Einrastsockel 26 ausgebildet, die seitlich nach außen über die jeweilige Randwand 23, 24 überstehen.

An einem dem Fußende 25 des Entriegelungsteiles 20 gegenüber liegenden Kopfende 27 des Entriegelungsteiles 20 verfügen die Randwände 23, 24 über eine an einem ersten Federarm 28 angeformte Einschubwiderlagernase 29, die auf ihrer dem Fußende 25 des Entriegelungsteiles 20 zugewandten Seite mit einer Aufgleitfläche 30 angeschrägt ist und auf ihrer dem Fußende 25 des Entriegelungsteiles 20 abgewandten Ende eine rechtwinklig zu der jeweiligen Randwand 23, 24 ausgerichtete Betätigungsfläche 31 aufweist.

Zwischen den Einrastsockeln 26 und den Einschubwiderlagernasen 29 weist das Entriegelungsteil 20 an jeder Randwand 23, 24 einen zweiten Federarm 32 auf, der sich von dem ersten Federarm 28 weg erstreckt und an dessen dem jeweiligen Einrastsockel 26 gegenüber liegenden Ende eine Auszugwiderlagernase 33 ausgebildet ist, die sich wie die Einschubwiderlagernase 29 nach außen über die jeweilige Randwand 23, 24 erstreckt.

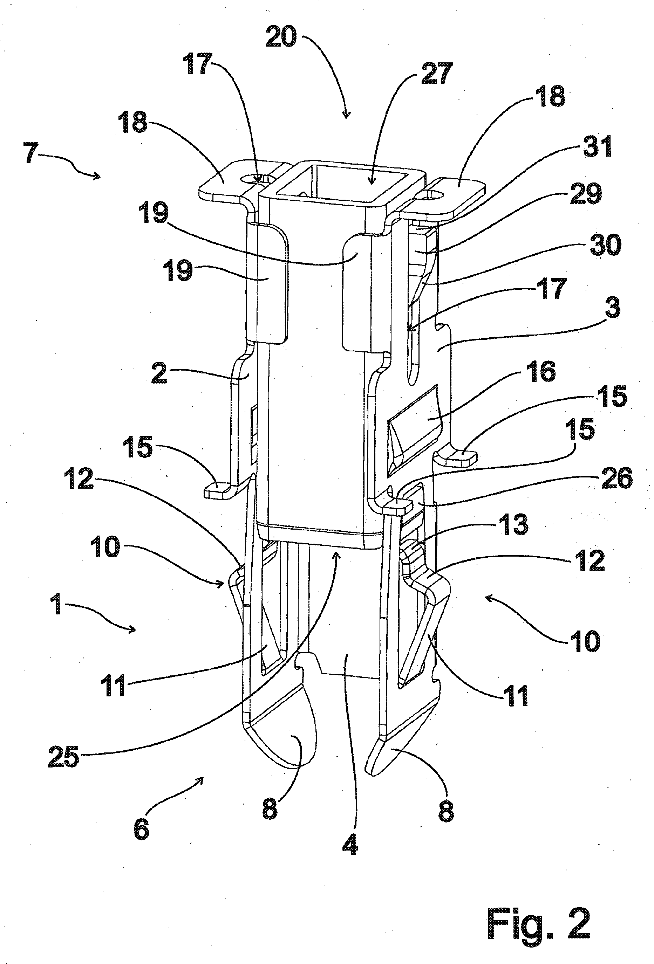

Fig. 2 zeigt in einer perspektivischen Ansicht das Ausführungsbeispiel gemäß Fig. 1 mit dem Entriegelungsteil 20 in einer bestimmungsgemäß in das Klammerteil 1 eingeschobenen Anordnung. Das Entriegelungsteil 20 befindet sich in der Darstellung gemäß Fig. 2 in einer Freigabeposition, in der das Fußende 25 des Entriegelungsteiles 20 einen Abstand von den Entriegelungsabschnitten 13 der Rastschenkel 10 aufweist. In der Freigabeposition des Entriegelungsteiles 20 sind die Auszugwiderlagernasen 33 in den Ausbuchtabschnitten 16 angeordnet, während die Einrastsockel 26 im Bereich der den Ausbuchtabschnitten 16 zugewandten Enden der Freimachungen 9 liegen und die Einschubwiderlagernasen 29 in den Führungsnuten 17 im Bereich ihrer den Kopfplatten 18 zugewandten Enden angeordnet sind. Aus Fig. 2 ist ersichtlich, dass die Außenkontur des Entriegelungsteiles 20 an die Gestalt des Innenraumes 14 des Klammerteiles 1 so angepasst ist, dass das Entriegelungsteil 20 im Wesentlichen spielfrei innerhalb des Innenraumes 14 verschiebbar und durch die Versteifungslaschen 19 zusätzlich geführt angeordnet ist.

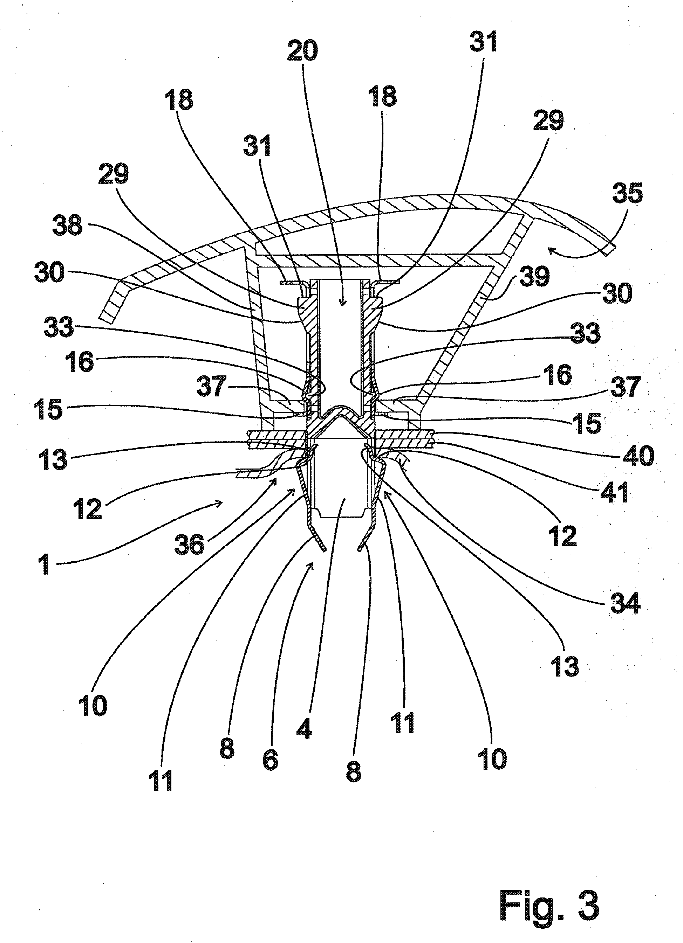

Fig. 3 zeigt in einer Schnittansicht das Ausführungsbeispiel einer erfindungsgemäßen Vorrichtung gemäß Fig. 1 mit dem Entriegelungsteil 20 in der Freigabeposition gemäß Fig. 2, wobei das Klammerteil 1 in Eingriff mit einem Trägerteil 34 und mit einem Anbauteil 35 ist. Der Eingriff mit dem Trägerteil 34 erfolgt über die Rastschenkel 10, deren Anlageabschnitte 12 den Rand einer in dem Trägerteil 34 eingebrachten Trägerteilausnehmung 36 hintergreifen, durch die das Klammerteil 1 unter Einfedern der Rastschenkel 10 zuvor eingefügt worden ist. Der Eingriff mit dem Anbauteil 35 erfolgt über an dem Anbauteil 35 ausgebildete Fixierstege 37 als Fixiermittel, die aufeinander zu weisend an Außenwänden 38, 39 des Anbauteiles 35 ausgebildet sind und an denen die Gegenzungen 15 sowie die Ausbuchtabschnitte 16 als Fixieranordnung außenseitig anliegen.

Der Darstellung gemäß Fig. 3 lässt sich entnehmen, dass zwischen dem Trägerteil 34 zugewandten Enden der Außenwände 38, 39 und der dem Anbauteil 35 zugewandten Seite einer flexiblen Textillage 40 beispielsweise eines Airbags und eine biegesteife Unterlage 41 angeordnet sind, die in der Montagestellung des Anbauteiles 35 auf dem Trägerteil 34 festgelegt sind und durch die das Klammerteil 1 ebenfalls durchgreift.

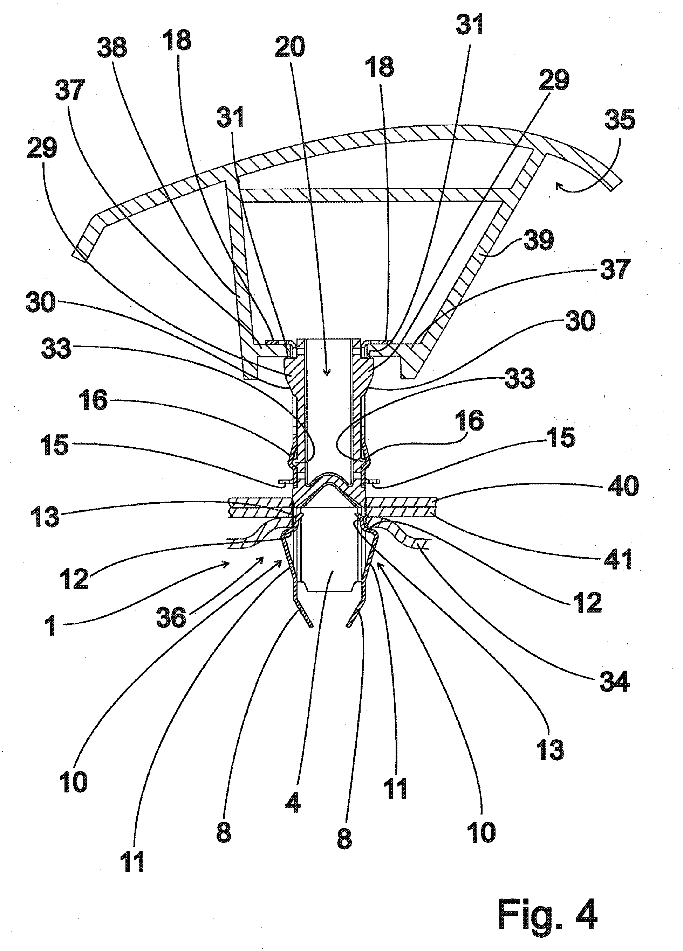

Fig. 4 zeigt die Anordnung gemäß Fig. 3 mit dem Anbauteil 35 in einer von dem Trägerteil 34 beabstandeten Auszugsstellung, die typischerweise nach dem Aufblasen eines Airbags mit entsprechender Bewegung der Textillage 40 von dem Trägerteil 34 weg unter Lösen des Eingriffs der Fixierstege 37 mit den Gegenzungen 15 und den Ausbuchtabschnitten 16 eingenommen worden ist. In der Auszugsstellung sind die Fixierstege 37 an die als Anschlageinrichtung wir-. kenden Kopfplatten 18 angeschlagen, so dass das Anbauteil 35 weiterhin mit dem Trägerteil 34 verbunden und an diesem in einem gegenüber der Montagestellung größeren Abstand gehalten ist.

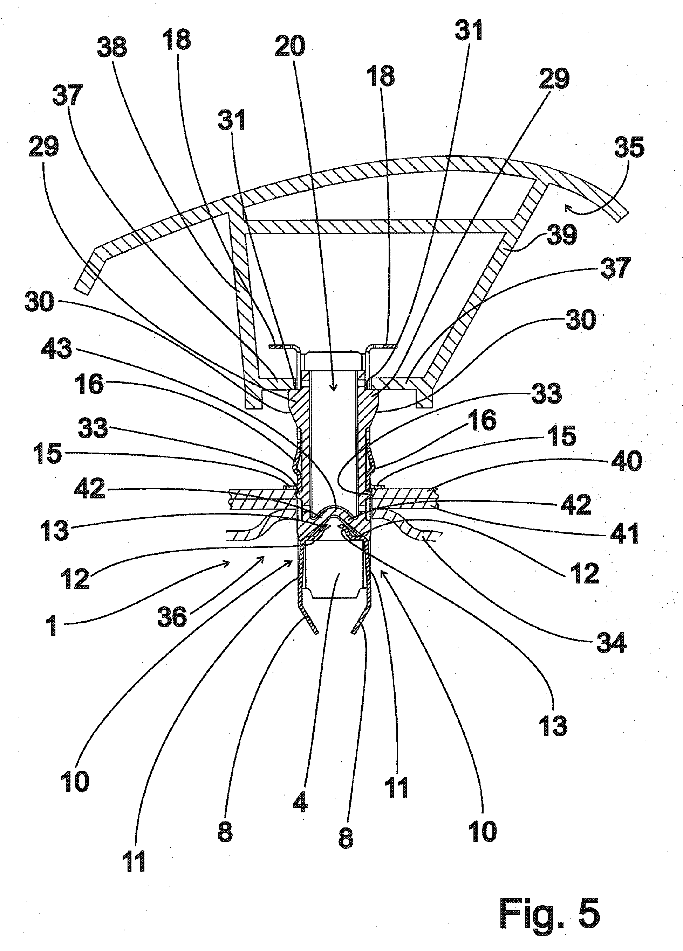

Fig. 5 zeigt die Anordnung gemäß Fig. 4, nachdem durch Bewegen des Anbauteiles 35 in Richtung des Trägerteiles 34 unter Anschlagen der Fixierstege 37 an den Betätigungsflächen 31 das Entriegelungsteil 20 mit Lösen des Eingriffs der Auszugwiderlagernasen 33 mit den Ausbuchtabschnitten 16 so weit in Richtung des Fußendes 6 des Klammerteiles 1 eingeschoben worden ist, bis die Auszugwiderlagernasen 33 in den Freimachungen 9 angeordnet sind. Während dieser Bewegung in eine Demontageposition sind die Rastarme 10 durch Anschlagen der Entriegelungsabschnitte 13 an dem Fußende 25 des Entriegelungsteiles 20 ausgebildeten, schräg gestellten Aufgleitwänden 42 einer Entriegelungskuppel 43 als Demontageeinrichtung, die sich von den an dem Fußende 25 des Entriegelungsteiles 20 liegenden Enden der Randwände 23, 24 schräg in Richtung des Kopfendes 27 des Entriegelungsteiles 20 erstrecken, so weit radial nach innen bewegt worden, dass die Anbindungsabschnitte 11 im Wesentlichen bündig mit den Seitenwänden 2, 3 abschließen und in dieser Stellung gehalten sind.

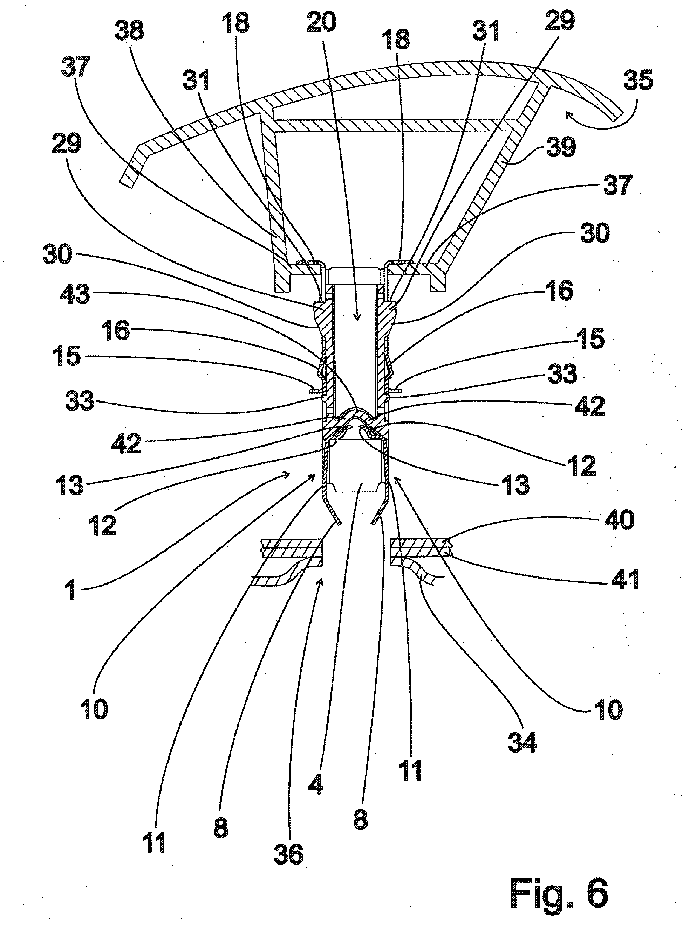

Fig. 6 zeigt in einer Schnittansicht die Anordnung gemäß Fig. 5 nach Herausziehen des Klammerteiles 1 aus dem Trägerteil 34. Das Herausziehen des Klammerteiles 1 aus dem Trägerteil 34 erfolgt dadurch, dass ausgehend von der Anordnung gemäß Fig. 5 das Anbauteil 35 von dem Trägerteil 34 entfernt wird und dabei nach Anschlag der Fixierstege 37 an den Kopfplatten 18 mit Fixieren der Rastschenkel 10 durch das Entriegelungsteil 20 in einer eingezogenen Stellung das Klammerteil 1 aus der Trägerteilausnehmung 36 im Wesentlichen widerstandsfrei herausgezogen werden kann.

Nach Lösen des Eingriffs der Auszugwiderlagernasen 33 aus den Freimachungen 9 ist das Entriegelungsteil 20 von der in Fig. 5 und in Fig. 6 dargestellten Demontageposition wieder in die Freigabeposition gemäß Fig. 2, gemäß Fig. 3 und gemäß Fig. 4 überführbar, so dass das Anbauteil 35 wieder in die Montagestellung gemäß Fig. 3 gebracht werden kann.

## Patentansprüche

1. Vorrichtung zum Halten eines Anbauteiles (35) an einem Trägerteil (34) in einer Montagestellung und in einer Auszugsstellung mit einem Klammerteil (1), das an einem Fußende (6) ausgebildete Rastschenkel (10) zum Eingriff mit einem Trägerteil (34) aufweist, das mit einer in einem Abstand von dem Fußende (6) ausgebildeten Fixieranordnung (15, 16) zum Eingriff mit einem Anbauteil (35) ausgestattet ist und das über eine Anschlageinrichtung (18) verfügt, die das Anbauteil (35) in der gegenüber der Montagestellung weiter von dem Trägerteil (34) beabstandeten Auszugsstellung hält, **dadurch gekennzeichnet, dass** ein Entriegelungsteil (20) vorhanden ist, das verschiebbar in dem Klammerteil (1) gelagert ist und das eine Demontageeinrichtung (42, 43) aufweist, mit der in einer Demontageposition des Entriegelungsteiles (20) ein Eingriff der Rastschenkel (10) mit dem Trägerteil (34) lösbar ist, dass das Klammerteil (1) zwei Seitenwände (2, 3) sowie wenigstens eine Querwand (4, 5) aufweist, die die Seitenwände (2, 3) verbindet, dass das Entriegelungsteil (20) als eine Hülse ausgeführt ist, die zwischen der oder jeder Querwand (4, 5) und den Seitenwänden (2, 3) angeordnet ist, und dass das Entriegelungsteil (20) an den Seitenwänden (2, 3) des Klammerteiles (1) zugewandten Randwänden (23, 24) im Bereich eines Fußendes (25) jeweils einen Einrastsockel (26) im Bereich eines Kopfendes (27) eine Einschubwiderlagernase (29) und zwischen dem Einrastsockel (26) sowie der Einschubwiderlagernase (29) eine Auszugswiderlagernase (33) aufweist.

2. Vorrichtung nach Anspruch 1, **dadurch gekennzeichnet, dass** jeder Rastschenkel (10) in einer Freimachung (9) einer Seitenwand (2, 3) ausgebildet ist und einen mit einer Seitenwand (2, 3) verbundenen ausgestellten Anbindungsabschnitt (11), einen winklig zu dem Anbindungsabschnitt (11) ausgerichteten Anlageabschnitt (12) sowie einen Entriegelungsabschnitt (13) aufweist, der wenigstens abschnittsweise innenseitig der betreffenden Seitenwand (2, 3) angeordnet ist.

3. Vorrichtung nach Anspruch 2, **dadurch gekennzeichnet, dass** das Klammerteil (1) zwischen jedem Anlageabschnitt (12) und einem Kopfende (7) wenigstens eine mit einer Seitenwand (2, 3) verbundene und von der Seitenwand (2, 3) nach außen abstehende Gegenzunge (15) aufweist.

4. Vorrichtung nach Anspruch 3, **dadurch gekennzeichnet, dass** das Klammerteil (1) zwischen jeder Gegenzungen (15) und dem Kopfende (7) einen von der Seitenwand (2, 3) nach auβen abstehenden Ausbuchtabschnitt (16), aufweist.

5. Vorrichtung nach Anspruch 4, **dadurch gekennzeichnet, dass** das Klammerteil (1) am Kopfende (7) über seitlich nach außen abgestellte Kopfplatten (18) verfügt.

6. Vorrichtung nach Anspruch 5, **dadurch gekennzeichnet, dass** in den Seitenwänden (2, 3) zwischen dem Ausbuchtabschnitt (16) und den Kopfplatten (18) eine länglich Führungsnut (17) ausgebildet ist.

7. Vorrichtung nach einem der Ansprüche 1 bis 6, **dadurch gekennzeichnet, dass** in einer Freigabeposition des Entriegelungsteiles (20) die Einschubwiderlagernasen (29) in den Führungsnuten (17), die Auszugswiderlagernasen (33) in den Ausbuchtabschnitten (16) und die Einrastsockel (26) in den Freimachungen (9) angeordnet sind.

8. Vorrichtung nach Anspruch 7, **dadurch gekennzeichnet, dass** in einer Demontageposition des Entriegelungsteiles (20) die Einschubwiderlagernasen (29) in den Führungsnuten (17) und die Auszugswiderlagernasen (33) sowie die Einrastsockel (26) in den Freimachungen (9) angeordnet sind.

9. Vorrichtung nach einem der Ansprüche 5 bis 8, **dadurch gekennzeichnet, dass** die Demontageeinrichtung über an einem Fußende (25) des Entriegelungsteiles (20) ausgebildete, innenliegende und schräg gestellte Aufgleitwände (42) verfügt, die beim Überführen des Entriegelüngsteiles (20) von einer Freigabeposition in eine Demontageposition mit den Rastschenkeln (10) in Eingriff kommen.

10. Vorrichtung nach einem der Ansprüche 5 bis 9, **dadurch gekennzeichnet, dass** das Entriegelungsteil (20) aus einem hartelastischen Kunststoffmaterial hergestellt ist.

11. Anordnung mit einer Vorrichtung gemäß einem der Ansprüche 1 bis 10 und mit einem Anbauteil (35), das Fixiermittel (37) aufweist, die in der Montagestellung mit dem Klammerteil (1) in Eingriff sind und mit denen das Entriegelungsteil (20) in die Demontageposition bewegbar ist.

12. Anordnung nach Anspruch 11, **dadurch gekennzeichnet, dass** die Fixiermitteln (37) auf an dem Entriegelungseil (20) ausgebildete Einschubwiderlagernasen (29) einwirken.

## Claims

1. Device for retaining an added part (35) on a carrying part (34) in a fitted position and in a pulled-back position, having a clip-in part (1) which has latching tongues (10) formed at a bottom end (6) to engage with a carrying part (34), which is equipped with a fixing arrangement (15, 16) formed at a distance from the bottom end (6) to engage with an added part (35), and which has a stop means (18) which retains the added part (35) in the pulled-back position, in which it is spaced further away from the carrying part (34), **characterised in that** there is an unlocking part (20) present which is displaceably mounted in the clip-in part (1) and which has a means for removal (42, 43) by which engagement of the latching tongues (10) with the carrying part (34) can be released when the unlocking part (20) is in a position for removal, **in that** the clip-in part (1) has two side-walls (2, 3) and at least one transverse wall (4, 5) which connects the side-walls (2, 3), **in that** the unlocking part (20) is in the form of a sleeve which is arranged between the or each transverse wall (4, 5) and the side-walls (2, 3), and **in that** the unlocking part (20) has a latch-in toe (26) in the region of a bottom end (25) and on each of the edge walls (23, 24) of the clip-in part (1) which are adjacent to the side-walls (2, 3) thereof, an abutment nose for pushing-in (29) in the region of a top end (27), and an abutment nose for withdrawal (33) between the latch-in toe (26) and the abutment nose for pushing-in (29).

2. Device according to claim 1, **characterised in that** each latching tongue (10) is formed in an opening (9) in a side-wall (2, 3) and has a flared-out connecting portion (11) connected to a side-wall (2, 3), a portion for contact (12) aligned at an angle to the connecting portion (11), and an unlocking portion (13) of which at least a portion is arranged on the inside of the side-wall (2, 3) concerned.

3. Device according to claim 2, **characterised in that** the clip-in part (1) has, between each portion for contact (12) and a top end (7), at least one tab for mating (15) which is connected to a side-wall (2, 3) and which projects outwards from the side-wall (2, 3).

4. Device according to claim 3, **characterised in that** the clip-in part (1) has, between each tab for mating (15) and the top end (7), a protruding portion (16) which projects outwards from the side-wall (2, 3).

5. Device according to claim 4, **characterised in that** the clip-in part (1) has, at the top end (7), top flanges (18) which are extended outwards laterally.

6. Device according to claim 5, **characterised in that** an elongated guiding slot (17) is formed in the side-walls (2, 3) between the protruding portion (16) and the top flanges (18).

7. Device according to one of claims 1 to 6, **characterised in that**, when the unlocking part (20) is in an inactive position, the abutment noses for pushing-in (29) are arranged in the guiding slots (17), the abutment noses for withdrawal (33) are arranged in the protruding portions (16), and the latch-in toes (26) are arranged in the openings (9).

8. Device according to claim 7, **characterised in that**, when the unlocking part (20) is in a position for removal, the abutment noses for pushing-in (29) are arranged in the guiding slots (17), and the abutment noses for withdrawal (33) and the latch-in toes (26) are arranged in the openings (9).

9. Device according to one of claims 5 to 8, **characterised in that** the removal means has interior, obliquely positioned walls for sliding on (42) which are formed at a bottom end (25) of the unlocking part (20) and which come into engagement with the latching tongues (10) when the unlocking part (20) is transferred from an inactive position to a position for removal.

10. Device according to one of claims 5 to 9, **characterised in that** the unlocking part (20) is made of a hard elastic plastics material.

11. Arrangement having a device according to one of claims 1 to 10 and having an added part (35) which has fixing means (37) which are in engagement with the clip-in part (1) in the fitted position and which can be used to move the unlocking part (20) to the position for removal.

12. Arrangement according to claim 11, **characterised in that** the fixing means (37) act on abutment noses for pushing-in (29) formed on the unlocking part (20).

## Revendications

1. Dispositif destiné à maintenir une pièce rapportée (35) sur une pièce faisant office de support (34) dans une position de montage et dans une position d'extraction, comprenant un élément d'agrafage (1), qui comporte, au niveau de son extrémité inférieure (6), des segments d'accrochage (10) pour permettre sa mise en prise d'encastrement dans une pièce faisant office de support (34), qui est muni d'un agencement d'immobilisation en position (15, 16) disposé à une certaine distance de l'extrémité inférieure (6) pour permettre sa mise en prise d'accrochage avec une pièce rapportée (35) et qui dispose d'un agencement formant butée (18), qui maintient la pièce rapportée (35) dans une position d'extraction possible située, par rapport à la position de montage, à une plus grande distance de la pièce faisant office de support, **caractérisé en ce qu'**il est prévu un élément de déverrouillage (20) qui est disposé avec la possibilité de coulisser dans l'élément d'agrafage (1) et qui comporte un dispositif de démontage (42, 43), au moyen duquel il est possible, dans une position de démontage de l'élément de déverrouillage (20), de dissocier les segments d'accrochage (10) de leur position d'accouplement réciproque avec la pièce faisant office de support (34), **en ce que** l'élément d'agrafage (1) comporte deux parois latérales (2, 3) ainsi qu'au-moins une paroi transversale (4, 5), qui raccorde les parois latérales (2, 3) l'une à l'autre, **en ce que** l'élément de déverrouillage (20) se présente sous la forme d'un manchon qui est disposé entre la ou chaque paroi transversale (4, 5) et les parois latérales (2, 3) et **en ce que** l'élément de déverrouillage (20) comporte, au niveau de ses parois de rive (23, 24) orientées vers les parois latérales (2, 3) de l'élément d'agrafage (1), dans la zone de son extrémité inférieure (25), respectivement un plot d'accrochage en prise d'encastrement (26), dans la zone de son extrémité supérieure (27) un ergot de butée à emmanchement par encliquetage (29) et entre le plot d'accrochage en prise d'encastrement (26) et l'ergot de butée à emmanchement par encliquetage (29) un ergot de butée d'extraction (33).

2. Dispositif selon la revendication 1, **caractérisé en ce que** chaque segment d'accrochage (10) est réalisé dans un dégagement (9) ménagé dans une paroi latérale (2, 3) et comporte, conjointement à une portion de liaison (11) en saillie raccordée à une paroi latérale (2, 3), une portion d'appui (12) orientée selon une disposition en angle droit en direction de la portion de liaison (11), ainsi qu'une portion de déverrouillage (13), qui est au moins dans une certaine proportion disposée sur le côté intérieur de la paroi latérale (2, 3) correspondante.

3. Dispositif selon la revendication 2, **caractérisé en ce que** l'élément d'agrafage (1) comporte, entre chaque portion d'appui (12) et son extrémité supérieure (7), au-moins une languette conjuguée (15) raccordée à une paroi latérale (2, 3) et faisant saillie vers l'extérieur depuis la paroi latérale (2, 3).

4. Dispositif selon la revendication 3, **caractérisé en ce que** l'élément d'agrafage (1) comporte, entre chaque languette conjuguée (15) et l'extrémité supérieure (7), une portion convexe (16) formant saillie vers l'extérieur depuis la paroi latérale (2, 3).

5. Dispositif selon la revendication 4, **caractérisé en ce que** l'élément d'agrafage (1) est muni, au niveau de son extrémité supérieure (7), de plaques formant tête (18) orientées dans le plan latéral vers l'extérieur.

6. Dispositif selon la revendication 5, **caractérisé en ce qu'**il est prévu, dans les parois latérales (2, 3), entre la portion convexe (16) et les plaques formant tête (18), une gorge de guidage de grande longueur (17).

7. Dispositif selon l'une des revendications 1 à 6, **caractérisé en ce que**, lorsque l'élément de déverrouillage (20) se trouve dans sa position de dégagement, les ergots de butée à engagement par encliquetage (29) sont engagés en prise dans les gorges de guidage (17), les ergots de butée d'extraction (33) sont engagés dans les portions convexes (16) et les plots d'accrochage sont en prise d'encastrement (26) dans les dégagements (9).

8. Dispositif selon la revendication 7, **caractérisé en ce que**, lorsque l'élément de déverrouillage (20) se trouve dans sa position de démontage, les ergots de butée à emmanchement par encliquetage (29) sont en position d'engagement dans les gorges de guidage (17) et les ergots de butée d'extraction (33) ainsi que les plots d'accrochage en prise d'encastrement (26) le sont dans les dégagements (9).

9. Dispositif selon l'une des revendications 5 à 8, **caractérisé en ce que** le dispositif de démontage comporte, au niveau de l'extrémité inférieure (25) de l'élément de déverrouillage (20), des parois de glissement intérieures à disposition oblique (42) qui viennent en prise d'engagement réciproque avec les segments d'accrochage (10) lorsque l'élément de déverrouillage (20) est amené de sa position libre dans sa position de démontage.

10. Dispositif selon l'une des revendications 5 à 9, **caractérisé en ce que** l'élément de déverrouillage (20) est réalisé dans une matière plastique à cèdage élastique dur.

11. Agencement se composant d'un dispositif réalisé selon l'une des revendications 1 à 10 et d'une pièce rapportée (35), qui est munie de moyens d'immobilisation en position (37), qui, dans la position de montage, sont en prise d'engagement avec l'élément d'agrafage (1) et par l'intermédiaire desquels il est possible d'amener l'élément de déverrouillage (20) dans la position de démontage.

12. Dispositif selon la revendication 11, **caractérisé en ce que** les moyens d'immobilisation en position (37) exercent une action sur des ergots de butée à emmanchement par encliquetage (29) dont l'élément de déverrouillage (20) est pourvu.
